# EUROPEAN PATENT APPLICATION

(11) **EP 2 096 780 A2**
(43) Date of publication of application: **02.09.2009**
(21) Application number: 09150506.5
(22) Date of filing: 14.01.2009
(51) Int. Cl.: H04J 14/02, E21B 47/12

(54) **Multidrop communications system using wave division multiplexing**

(30) Priority: 29.02.2008 GB 0803783
(71) Applicant: Vetco Gray Controls Limited, Bristol BS48 1BS (GB)
(72) Inventor: Dalzier, Robert, Highbridge, Somerset (GB)
(74) Representative: Newstead, Michael John

(57) **Abstract**

A multidrop communications system for transferring data to a plurality of devices, comprises an optical fibre having first and second ends, a plurality of light sources for producing light of different respective wavelengths, modulation means to modulate light from each light source to encode respective data thereon, the modulation means outputting a plurality of modulated light components having said respective wavelengths, an optical multiplexer for multiplexing said modulated light components onto said first end of the optical fibre using wavelength division multiplexing, an optical demultiplexer connected to the second end of the optical fibre for demultiplexing light therefrom into a plurality of components having respective wavelengths, demodulation means for demodulating each of said components to extract said respective data, and means for transferring the extracted data to different respective target devices.

## Description

This invention relates to a multidrop communications system for transferring data to a plurality of devices, a hydrocarbon production facility comprising such a communication system, and a method of transmitting discrete data sets from a surface location to respective devices at an underwater well installation in a multidrop configuration.

Marine hydrocarbon production facilities require robust communication between a surface location, for example a control platform or shore-based station, and an underwater well installation, for example a well or group of wells at the seabed. This enables control signals to be sent from the surface location to the well installation, to control for example actuators or valves at a well head, and also enables monitoring signals from sensors at the well head to be sent to the surface location. Conventionally, such communication is enabled by conducting lines or optical fibres located within an umbilical cable which runs between the installation and the surface location. In general copper modems are used to communicate between the surface location and the installation where the distance between them is say a few kilometres. Fibre optic systems are currently used where the distances are substantial e.g. 100 km or more. However the increased requirements of bandwidth, to control and monitor larger well complexes, can result in the need for fibre optic communications, even though the transmission distances are relatively small.

The use of a single optical fibre for subsea control system communication suffers from the drawback of being difficult to distribute to a number of units or nodes, for example individual wells. This is because the optical signal strength is shared in equal proportions between the number of units / nodes. For example, if there were ten nodes, the signal strength received at each node would be one tenth of the value of the total signal strength carried by the single fibre. Such losses can make it impractical to use such a system due to poor signal to noise ratio. Further, there are also practical considerations with realising such a system in terms of terminating a fibre from a subsea umbilical and fusing it into an optical splitter for distribution purposes. For these reasons, the conventionally preferred solution is to use point to point fibres to each unit / node, e.g. one fibre is provided between each well and the surface location. However, this means that the umbilical has to carry a number of fibres, which themselves must be terminated at the distribution end, which is a time consuming and risky process. Furthermore, the provision of a multiplicity of optical fibres in the umbilical is expensive, and its increased size and weight incurs further costs relating to its handling and installation.

It is an aim of the present invention to provide a multidrop communications system, suitable for hydrocarbon production facilities, with which these problems are overcome. This aim is achieved by the use of Wavelength Division Multiplexing (WDM) as an alternative to using an optical splitter to achieve multidrop communication from a single fibre.

With WDM, different wavelengths of light are used to create a number of communication channels within a single fibre. By using passive or tuneable filtering, discrimination between the channels is realisable.

The present invention is therefore provides the necessary multidrop fibre optic communication between a surface location such as a control platform and subsea wells without the need for a separate fibre within the umbilical for each well. Furthermore it enables simple connection of fibres using standard optical connectors and avoids the use of optical splitters and the ensuing poor signal to noise ratio.

WDM is currently being used by the telecommunication industry to increase data handling capacity. However, with the present invention, WDM is not used to increase capacity, but to achieve a reliable multidrop capability. This enables the use of a single fibre to accommodate on one channel the control needs of any subsea control system.

In accordance with a first embodiment of the present invention, there is provided a multidrop communications system for transferring data to a plurality of devices as set out in the accompanying claims.

In accordance with a second embodiment of the present invention, there is provided a hydrocarbon production facility comprising a communication system as set out in the accompanying claims.

In accordance with a third embodiment of the present invention, there is provided a method of transmitting discrete data sets from a surface location to respective devices at an underwater well installation in a multidrop configuration as set out in the accompanying claims.

When using a WDM system in a hydrocarbon production facility according to the present invention, the umbilical fibre is terminated at the transmit end in an optical connector and plugged into either a passive or active WDM combiner and likewise at the receiving, subsea end, a WDM distributor. Commercial devices are available to effect these functions both as Coarse Wavelength Division Multiplexers (CWDM) and Dense Wavelength Division Multiplexers (DWDM). CWDM devices are generally cheaper as they operate using low cost uncooled lasers, but at present they are limited to typically 18 channels spaced about 20 nm apart, which is adequate for the majority of subsea applications. DWDM devices use more expensive cooled lasers but have a channel capacity of up to 80 channels, which is rather more than typical current subsea well control requirements. Commercially available multiplexing and demultiplexing devices can typically handle 8 inputs and outputs each, with expansion capability, and can handle a variety of data formats including Ethernet. Such devices are used in telecommunication systems with transmission ranges up to 600 Km and data rates of typically 100 Giga bits per channel, which is more than adequate for typical current subsea control systems.

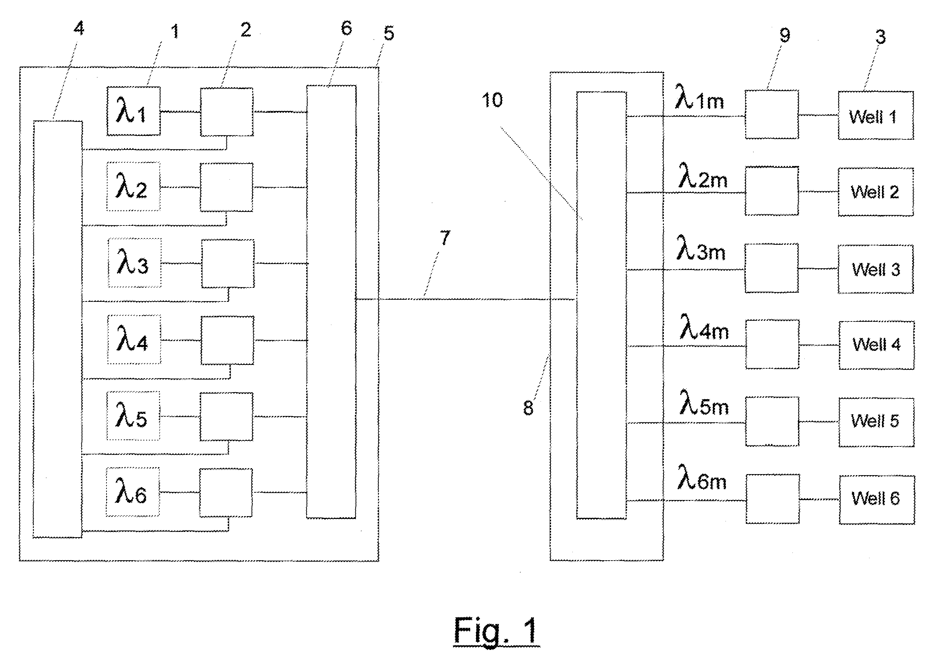

The invention will now be described, by way of example, with reference to the accompanying drawings, in which:-
Figure 1 schematically shows a communications system in accordance with the present invention, as incorporated in a hydrocarbon production facility.

The embodiment shown in Fig. 1 uses an installation with six wells 3 as an illustration. A surface location 5, such as a control platform, includes a plurality of light sources 1 such as lasers. The light source 1 shown uppermost in Fig. 1 produces an optical output with a wavelength of λ1, which is connected via an optical fibre to one of a plurality of phase / frequency optical modulators 2. A control processor 4 supplies electrical control data to control one well 3 to the modulator 2. The modulated optical output λ1, from the modulator 2, is fed via an optical fibre to an optical multiplexer 6. Further lasers 1, operating at different respective wavelengths λ2, λ3, λ4, λ5 and λ6 are connected to separate respective modulators 2, each of which are fed with discrete respective electrical data sets from the well control processor 4 to provide optically modulated control signals for each of the other five wells. The outputs from these modulators are also fed to the optical multiplexer 6. The optical multiplexer 6 acts to multiplex, using wave division multiplexing, all of the modulated inputs from modulators 2 to provide a single optical output with various components of respective wavelengths λ1 to λ6, each of which, by appropriate choice of the laser wavelengths, are separated from each other sufficiently to allow for the bandwidth of the light, resulting from its phase / frequency modulation. The bandwidth of each channel may be around 100Ghz for example to ensure no crosstalk between the control channels. This optical output is fed to an optical fibre which is carried by an umbilical 7. The umbilical 7 runs between the surface location 5 and a manifold 8 of the underwater well installation, located on the seabed in a position to suit the locations of the wells. Thus a single optical fibre within umbilical 7 carries, simultaneously, control signals for each well as modulated light at six respective wavelengths. The optical output from the umbilical fibre is fed to an optical demultiplexer 10 located at the manifold 8. This separates out each modulated wavelength λ1m, λ2m, λ3m, λ4m, λ5m, and λ6m, and feeds each component to separate optical demodulators 9. These extract and output the electrical control signals for each respective well.

It can be seen therefore that using the present invention, optical signals are fed to each well without the losses that would result from using an optical splitter as in conventional systems.

The above-described system makes use of a single fibre for a single direction. Thus, for the return of control feedback and monitoring signals, a duplicate system using a second fibre is required. This system is particularly suitable where there is a long distance, for example 100 km or more between the surface location and the installation, because the use of a two-way path would result in a greater loss of light and thus inadequate signal to noise ratios.

In an alternative embodiment, particularly suitable for installations such as those using fibre optic systems to achieve bandwidth and where the distances are relatively short, two-way communication may be effected through a single fibre, without the need for lasers at the installation end for the return monitoring data transmission by WDM. Such a communications system is described for example by US 5905586. This requires unmodulated laser sources to be transmitted down the fibre, alongside the modulated control light, which can then be modulated with monitoring data at the well end and retransmitted back up the fibre to the surface location.

The above described embodiments are exemplary only, and various alternatives will be apparent to those skilled in the art within the scope of the accompanying claims. For example, the communications system described need not be limited to use within a hydrocarbon production facility.

While the individual target devices in the embodiment shown in Fig. 1 are wells, it is possible that the target devices may be items of apparatus distributed among one or more wells.

Although separate modulators / demodulators are shown, modulation and demodulation may be carried by unitary devices.

## Claims

1. A multidrop communications system for transferring data to a plurality of devices, comprising:
an optical fibre having first and second ends,
a plurality of light sources for producing light of different respective wavelengths,
modulation means to modulate light from each light source to encode respective data thereon, the modulation means outputting a plurality of modulated light components having said respective wavelengths,
an optical multiplexer for multiplexing said modulated light components onto said first end of the optical fibre using wavelength division multiplexing,
an optical demultiplexer connected to the second end of the optical fibre for demultiplexing light therefrom into a plurality of components having respective wavelengths,
demodulation means for demodulating each of said components to extract said respective data, and
means for transferring the extracted data to different respective target devices.

2. A communications system according to claim 1, wherein the modulation means comprises a plurality of separate modulators, each arranged for modulating light from a different respective light source.

3. A communications system according to either of claims 1 and 2, wherein the demodulation means comprises a plurality of separate demodulators, each arranged for demodulating a different respective component.

4. A communications system according to any preceding claim, comprising return means for enabling return data to be sent from the second end to the first end of the optical fibre.

5. A communications system according to claim 4, wherein the return means comprises an unmodulated light source connected at the first end of the optical fibre and second modulating means provided at the second end of the optical fibre, arranged such that unmodulated light may be transmitted from the first end to the second end of the optical fibre, modulated by the second modulating means and transmitted from the second to the first end of the optical fibre.

6. A hydrocarbon production facility comprising a communication system in accordance with any preceding claim, wherein the plurality of light sources, the modulation means, the optical multiplexer and the first end of the optical fibre are all located at a surface location, and the optical demultiplexer, the demodulation means and the second end of the optical fibre are all located at an underwater installation.

7. A facility according to claim 6, wherein the respective target devices comprise respective hydrocarbon production wells.

8. A facility according to either of claims 6 and 7, wherein the optical demultiplexer is located at a manifold.

9. A facility according to any of claims 6 to 8, wherein the data comprise control signals for controlling apparatus at the installation.

10. A facility according to any of claims 6 to 9 when directly or indirectly dependent on claim 4, wherein the return data comprise monitoring signals from apparatus at the installation.

11. A method of transmitting discrete data sets from a surface location to respective devices at an underwater well installation in a multidrop configuration, the method comprising the step of using wavelength division multiplexing to transmit the data via an optical fibre running between the surface location and the underwater installation.
